# EUROPEAN PATENT SPECIFICATION

(11) **EP 2 918 850 B1**
(45) Date of publication and mention of the grant of the patent: **18.04.2018**
(21) Application number: 12888204.0
(22) Date of filing: 07.11.2012
(51) Int. Cl.: F04D 1/06, F04D 7/04, F04D 13/14, F04D 13/16, F04D 29/42, F04D 29/70, B01D 21/26, B01D 21/00

(54) **PUMP DEVICE**
PUMPVORRICHTUNG
DISPOSITIF DE POMPE

(43) Date of publication of application: 16.09.2015
(73) Proprietor: Nippon Oil Pump Co., Ltd., Kumagaya-shi, Saitama 360-0831 (JP)
(72) Inventor: KAWANO Yuji, Kumagaya-shi Saitama 360-0831 (JP)
(74) Representative: Piésold, Alexander James
(86) International application number: PCT/JP2012/078853
(87) International publication number: WO 2014/073054

(56) References cited:
- WO-A1-2012/004873
- WO-A1-2012/053066
- WO-A1-2012/053231
- JP-A- 2005 238 071
- US-A- 4 587 024

## Description

The present invention relates to a pump which suctions and discharges a liquid and more particularly to a pump device having a function of separating foreign matter (chips, for example) from operating fluid (lubricant oil of a machine tool, a liquid such as a coolant and the like, for example) in which the foreign matter is contained.

As the pump device as above, a light-weight and small-sized pump device not requiring regular maintenance work, having a displacement pump, a non positive displacement pump, a primary cyclone, and a secondary cyclone provided, the primary cyclone and the secondary cyclone including a mechanism (outlet) for discharging separated foreign matter (chips or the like), a discharge flow rate of the non positive displacement pump being set larger than the discharge flow rate of said displacement pump, and said displacement pump, said cyclone filter, and said non positive displacement pump are arranged in a linearly connected manner in a perpendicular direction is proposed (see WO 2012/053231). Please note that throughout the description, the terms cyclone and cyclone separator are used interchangeably.

Such a pump device is useful.

However, there is a demand for processing of a large quantity of coolant (so-called "demand for a larger flow rate") in machine tools in recent years.

In response to such a demand for a larger flow rate, it has been difficult for the above-described pump device to satisfy the demand for a larger flow rate of coolant processing since the operating fluid is processed by a displacement pump such as a so-called "trochoid pump" (gear pump) and a processed flow rate of the operating fluid is small.

The present invention is proposed in view of the above-described problems of the prior-art and has an object to provide a pump device having a function of separating foreign matter (chips, for example) from operating fluid (lubricant oil of a machine tool, a liquid such as a coolant, for example) in which the foreign matter is contained and capable of satisfying the demand for a larger flow rate of the operating fluid.

A pump device of the present invention is described in appended claim 1. It comprises a first pump (a centrifugal pump having an impeller, for example) provided above an operating fluid (coolant, for example) storing portion (coolant tank, for example); a second pump (a centrifugal pump such as an impeller, for example) having a rotating shaft coaxial with a rotating shaft of the first pump, the second pump being arranged to pump up operating fluid from the operating fluid storing portion; at least one cyclone separator provided in a region above the second pump and below a suction opening of the first pump, for receiving operating fluid pumped up by the second pump, having a function of separating the operating fluid into a clean operating fluid not containing foreign matter and an operating fluid containing the foreign matter, and being arranged to supply the clean operating fluid to the first pump; a discharge opening for the operating fluid containing the foreign matter separated by the cyclone separator; and an outlet of said cyclone separator for the operating fluid containing the foreign matter; the first pump is a non positive displacement pump ; and the discharge opening is provided above the operating fluid storing portion and has a discharge pipe communicating with said discharge opening from a level of the outlet of said cyclone separator.

In the present invention, and according to appended claim 2, in a region above said second pump and outside in a radial direction of an impeller of the second pump, a guide member extending in a direction of the rotating shaft of the first pump and the second pump is preferably provided.

Here, a dimension of said guide member in the pump rotating shaft direction is preferably long (to such a degree to the maximum that an upper end of said guide reaches the same level as an inlet of the cyclone separator). That is because it is convenient for generating a swirl flow.

Moreover, in the present invention, and according to appended claim 3, an inlet of the cyclone separator communicates with an inflow passage extending in a circumferential direction, and the inflow passage is preferably opened to the swirl flow along said guide member.

Moreover, in the present invention, and according to appended claim 4, a throttle member (a member having a conical shape: conical member) is preferably provided on a lower end portion of the cyclone separator.

In addition, in order to reduce abrasion of the pump rotating shaft, the rotating shaft of the first pump and the second pump is preferably supported pivotally by a mechanical seal in the present invention.

Moreover, a drain circuit for returning oil leaking out (upward) from the mechanical seal into the tank is preferably provided so that the oil leaking out of the mechanical seal does not flow out to the outside of the operating fluid storing portion (coolant tank, for example).

According to the present invention provided with the above-described constitution, since the first pump is constituted by a non positive displacement pump (a centrifugal pump having an impeller, for example), a large flow rate (a flow rate of 150 liters/minute or more, for example) can be handled. Thus, an increase of a processing amount of the coolant in the machine tool (demand for a larger flow rate) can be handled.

Here, since a non positive displacement pump (the centrifugal pump having an impeller, for example) has a poor self-suctioning performance, if it is provided above the operating fluid storing portion (the coolant tank, for example), suctioning of the operating fluid in the storing portion is difficult. However, the present invention has the second pump, the operating fluid in the storing portion is pushed upwardly (the suction opening side of the first pump) by the second pump, and necessary processing can be performed even with the first non-displacement pump.

Moreover, according to the present invention, foreign matter such as chips and the like can be separated from the operating fluid by the cyclone separator.

In the present invention, by constituting the first pump by a non positive displacement pump (a centrifugal pump having an impeller, for example), there is no need to provide a relief valve at the first pump outlet.

In a case in which the first pump is constituted by a displacement pump, if a flow of the operating fluid stops on the downstream side of the outlet, an operating fluid pressure in the vicinity of the outlet becomes excessive, and the relief valve and a relief path of the operating fluid is indispensable. On the other hand, if the first pump is a non positive displacement pump such as the centrifugal pump having an impeller, for example, even if the flow of the operating fluid stops on the downstream side of the pump outlet, impellers merely idle and the operating fluid pressure in the vicinity of the outlet does not become excessive. Therefore, there is no need to form the relief valve and a relief path of the operating fluid in the vicinity of the outlet, and a cost which should be spent in manufacture can be saved for that portion. Moreover, maintenance of the relief valve and the relief path of the operating fluid is not necessary, and a running cost also lowers.

Here, since the prior-art has a structure in which two stages of cyclones (primary cyclone and secondary cyclone) are provided, the "demand for a larger flow rate" cannot be met easily, and sufficient solid-liquid separation of the large flow rate of the operating fluid is difficult.

On the other hand, according to preferred embodiments of the present invention, since only one stage of the cyclone is provided, even if the flow rate of the operating fluid becomes large, the operating fluid can be separated to sufficient solid-liquid separation.

Moreover, according to the present invention, since the discharge pipe communicating with said discharge opening from the level of the outlet (lower end portion) of the cyclone separator is provided, the operating fluid containing the foreign matter discharged from the cyclone separator outlet is discharged to the discharge opening above the operating fluid storing portion (the coolant tank, for example).

Therefore, by arranging a pipeline communicating with a foreign-matter processing facility (a filter or the like, for example, not shown) from said discharge opening above the operating fluid storing portion, the operating fluid containing the foreign matter separated by the cyclone separator can be easily supplied to the foreign-matter processing facility.

In other words, in the prior-art not having such a discharge pipe, the operating fluid containing the foreign matter separated by the cyclone has been discharged to the operating fluid storing portion and thus, in order to supply the operating fluid containing the foreign matter to the foreign-matter processing facility, a mechanism or a pipeline for sending the foreign matter to the foreign-matter processing facility should be separately provided in the operating fluid storing portion.

On the other hand, according to the present invention, there is no need to provide a mechanism or a pipeline for sending the foreign matter to the foreign-matter processing facility in the operating fluid storing portion, and a manufacturing cost can be reduced for that portion.

In the present invention, the operating fluid suctioned by the second pump and discharged outward in the radial direction flows into the cyclone separator while forming a swirl flow flowing in the circumferential direction and rising in the pump device.

However, if said guide member is not present, the resistance is generated in the swirl flow by the cyclone in the pump device, and there is a possibility that a favorable swirl flow is not generated.

In a region above said second pump (the centrifugal pump such as an impeller, for example) and outside in the radial direction in the second pump, the guide member extending in the direction of the rotating shaft of the first pump and the second pump is provided and thus, a favorable swirl flow flowing in the circumferential direction along the guide member is formed by being guided by the guide member, and the operating fluid suctioned by the second pump rises efficiently in the pump device and flows into the cyclone separator.

Then, in the present invention, the inlet of the cyclone separator communicates with the inflow passage extending in the circumferential direction, and if the inflow passage is opened to the swirl flow along said guide member, the operating fluid suctioned by the second pump can easily enter the cyclone separator, and the foreign matter contained in the operating fluid is efficiently separated from the operating fluid by a centrifugal separation action in the cyclone separator.

Moreover, in the present invention, by providing the throttle member (a member having a conical shape: a conical member) on the lower end portion of the cyclone separator, a cross-sectional area of the outlet of the cyclone lower end portion can be made smaller (narrowed) by the throttle member.

Since the cross-sectional area of the outlet of the cyclone lower end portion is narrowed (made smaller) by the throttle member, a flow velocity of the operating fluid in the outlet increases. That is, a required flow rate can be adjusted even if a length of the cyclone separator in an axial direction is reduced. Therefore, according to the present invention, the entire pump device can be made compact by making the dimension of a region below the first pump smaller without prolonging the length of the cyclone separator in the pump rotating shaft direction (vertical direction).

Fig. 1 is a sectional view illustrating a first embodiment of the present invention.
Fig. 2 is a planar sectional view illustrating a shape of a cyclone inlet in the first embodiment.
Fig. 3 is a side view of a pump driving shaft in the first embodiment.
Fig. 4 is a partial sectional view for explaining a first pump in the first embodiment.
Fig. 5 is a partial sectional view for explaining a cyclone in the first embodiment.
Fig. 6 is a partial sectional view for explaining a second pump in the first embodiment.
Fig. 7 is a sectional view of a casing of the second pump.
Fig. 8 is a sectional view of an impeller of the second pump.
Fig. 9 is a sectional view of a fixing member for indirectly fixing the impeller of the second pump to the pump driving shaft.
Fig. 10 is a sectional view of a casing of a pump for discharging foreign matter.
Fig. 11 is a sectional view of an impeller of the pump for discharging foreign matter.
Fig. 12 is a sectional view of a partition plate between a region on a side of the cyclone and a region on a side of the pump for discharging foreign matter.
Fig. 13 is a sectional view of a fixing member for fixing an impeller for discharging foreign matter to the pump driving shaft.
Fig. 14 is a planar sectional view illustrating a shape of a cyclone inlet in a second embodiment of the present invention.

Embodiments of the present invention will be described below, by way of example only and by referring to the attached drawings.

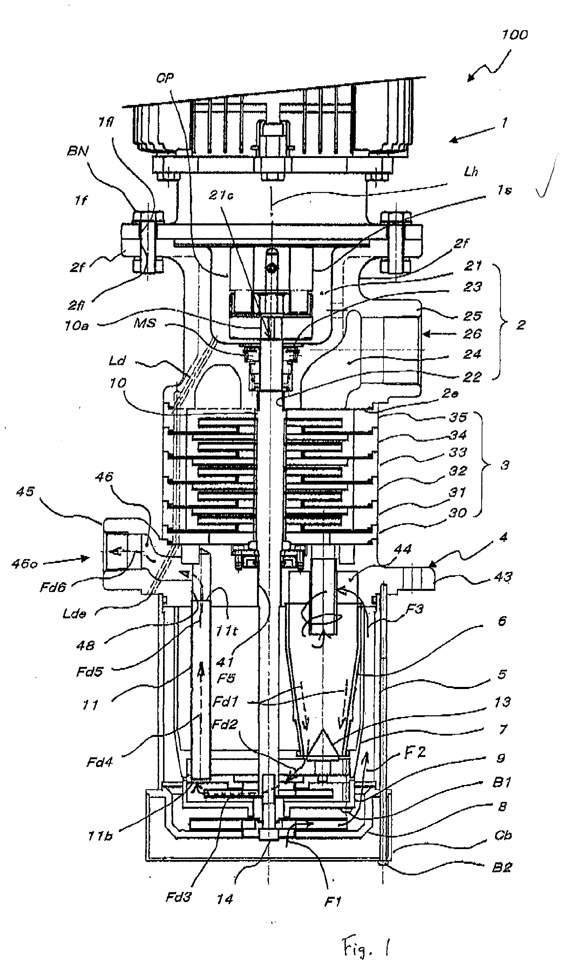

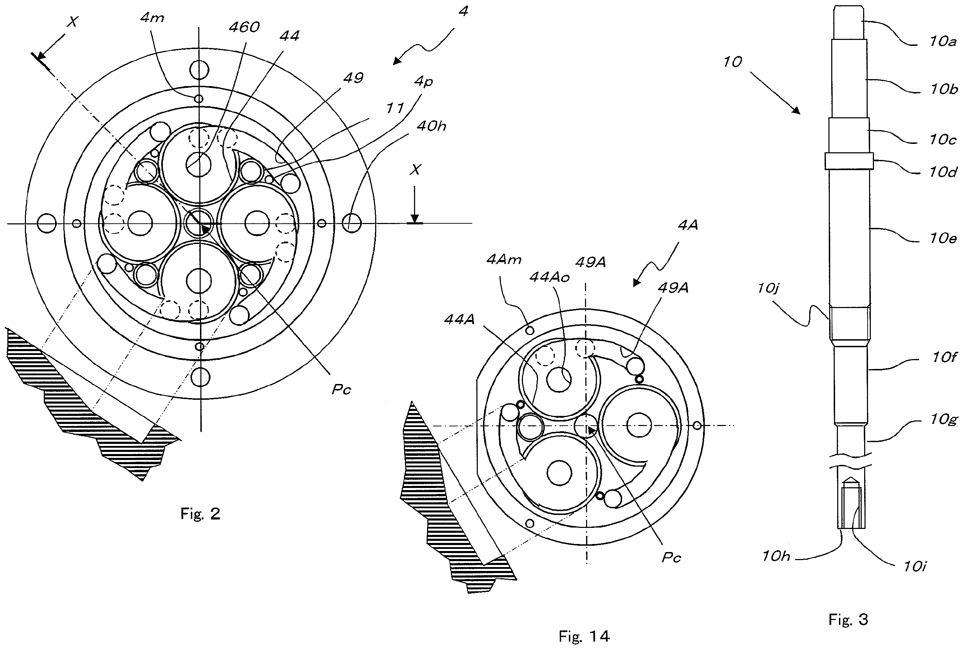

First, by referring to Figs. 1 to 12, a pump device according to a first embodiment of the present invention will be described. A section illustrated in Fig. 1 is an X-X line arrow sectional view in Fig. 2.

The pump device according to the first embodiment of the present invention is indicated in general by reference numeral 100 in Fig. 1. The pump device 100 includes an electric motor 1, a first housing 2, a first pump 3, a second housing 4, a cylindrical casing 5, a plurality of (four in the illustration) cyclones 6, a cylindrical guide member 7, a second pump 8, a foreign-matter discharge pump 9, a cover member Cb, and a pump driving shaft 10.

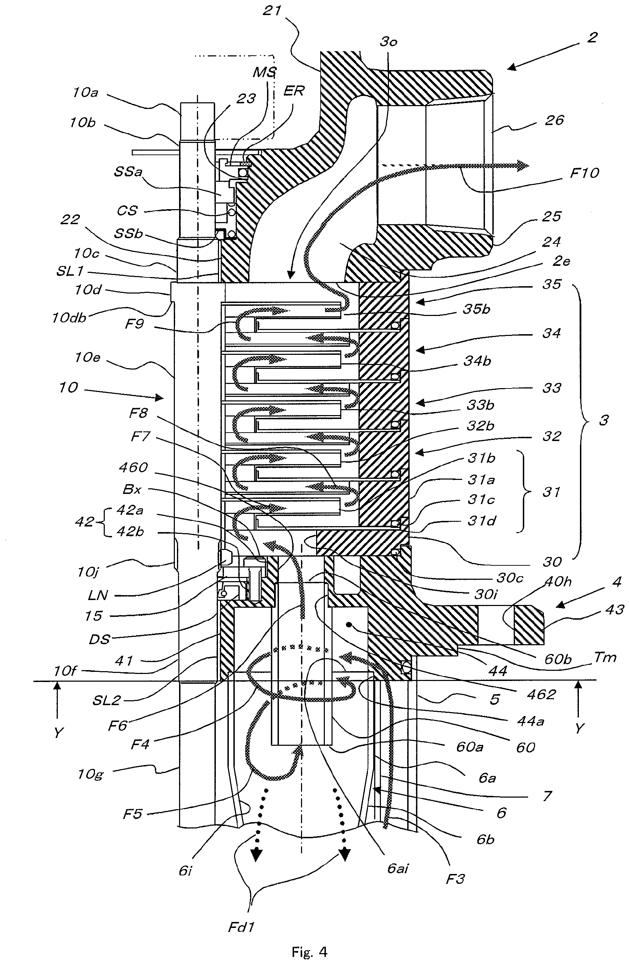

The first pump 3 is a non positive displacement centrifugal pump in which pump units (31 to 35), each having an impeller, are laminated in five stages in a vertical direction (see Fig. 4). Here, as the first pump 3, a known commercially-available non positive displacement centrifugal pump can be applied.

The second pump 8 is arranged in a lowermost region in Fig. 1.

The first housing 2 has a cylindrical hollow portion 21 opened in an upper part in Fig. 1 and has a shaft through hole 22 formed. The shaft through hole 22 penetrates from a lower center 21c of the cylindrical hollow portion 21 to a center of a housing lower end surface 2e.

A seal storage chamber 23 is formed in the shaft through hole 22, and a mechanical seal MS is interposed in the seal storage chamber 23. The mechanical seal MS pivotally supports the pump driving shaft 10 rotatably and prevents leakage of the operating fluid from the first pump 3 into the cylindrical hollow portion 21 through the shaft through hole 22.

As illustrated in Fig. 4, the mechanical seal MS is held in the storage chamber 23.

In Fig. 1, a channel 24 is formed in a lower region of the first housing 2.

A boss portion 25 is formed on the housing outer periphery 2f in the first housing 2, and the boss portion 25 crosses a center axis Lh of the housing and protrudes in a direction away to the center axis Lh.

A discharge opening 26 is opened in the boss portion 25, and the discharge opening 26 communicates with the channel 24. The operating fluid whose pressure has been raised by the first pump 3 is discharged from the discharge opening 26.

The channel 24 communicates with a discharge side 3o of the first pump 3 (see Fig. 4).

A taper female screw for a pipe is formed on an inner peripheral surface of the discharge opening 26.

As illustrated in Fig. 1, in the cylindrical hollow portion 21 of the housing 2, a coupling CP connects a shaft 1S of the electric motor 1 and an upper end portion (coupling engagement portion 10a) of the pump driving shaft 10.

In Fig. 3, the pump driving shaft 10 has the coupling engagement portion 10a, a mechanical seal engagement portion 10b, the first housing engagement portion 10c, a flange portion 10d, a first pump engagement portion 10e, a second housing engagement portion 10f, and a tip-end shaft portion 10g.

A screw hole 10i having a female screw provided is formed on an end surface 10h of the tip-end shaft portion 10g (lower end surface in Fig. 3).

As described above, the coupling engagement portion 10a of the pump driving shaft 10 is engaged with an engagement hole (not shown) of the coupling CP.

In Fig. 4, the first housing engagement portion 10c in the pump driving shaft 10 is slidable with respect to a bearing sleeve SL1, and the bearing sleeve SL1 is fixed to the through hole 22 formed at the center of the first housing 2.

In Fig. 4, a lower end surface 10db in the flange portion 10d in the pump driving shaft 10 abuts on an upper end surface of the impeller 35b in the uppermost stage pump unit 35 of the first pump 3, and the lower end surface 10db and the upper end surface of the impeller 35b do not slide. The flange portion 10d exerts a function as a positioning member (on an upper side) of the first pump 3.

A region below the first pump engagement portion 10e (vicinity of a boundary with the second housing engagement portion 10f) of the pump driving shaft 10 has a male screw 10j formed.

In Figs. 1 and 4, the first pump 3 has a suction-side connecting member 30, the first pump unit 31 (lowermost stage unit), to the fifth pump unit 35 (uppermost stage unit) laminated.

In Fig. 4, the first pump unit 31 has an annular pump housing 31a, the impeller 31b, an O-ring 31c which is a seal member, and a partition plate 31d. The second pump unit 32 to fifth pump unit 35 have the similar constitution.

In Fig. 4, in a state in which the pump units 31 to 35 are laminated and assembled, the pump driving shaft 10 is inserted into an inner periphery of each sleeve of the pump units 31 to 35, and a locknut LN is screwed with the male screw 10j of the pump driving shaft 10 and tightened.

As a result, the first pump 3 is fixed to the pump driving shaft 10, and the impeller of each of the pump units 31 to 35 becomes rotatable integrally with the pump driving shaft 10.

Alternatively, without using the lock nut LN, the first pump engagement portion 10e of the pump driving shaft 10 is preferably constituted as a spline.

Subsequently, the second housing 4 will be described by referring to Figs. 1 and 4.

In Figs. 1 and 4, the second housing 4 includes a pump shaft hole 41, a dust-seal storing hole 42 (see Fig. 4), a mounting flange 43, a cyclone upper chamber 44, a boss portion 45 (see Fig. 1: not shown in Fig. 4), a channel 46 (see Fig. 1: not shown in Fig. 4), and a perpendicular channel 48 (see Fig. 1: not shown in Fig. 4).

As illustrated in Fig. 4, a plurality of (four in the first embodiment: see Fig. 2) of bolt holes 40h for mounting are formed in the mounting flange 43.

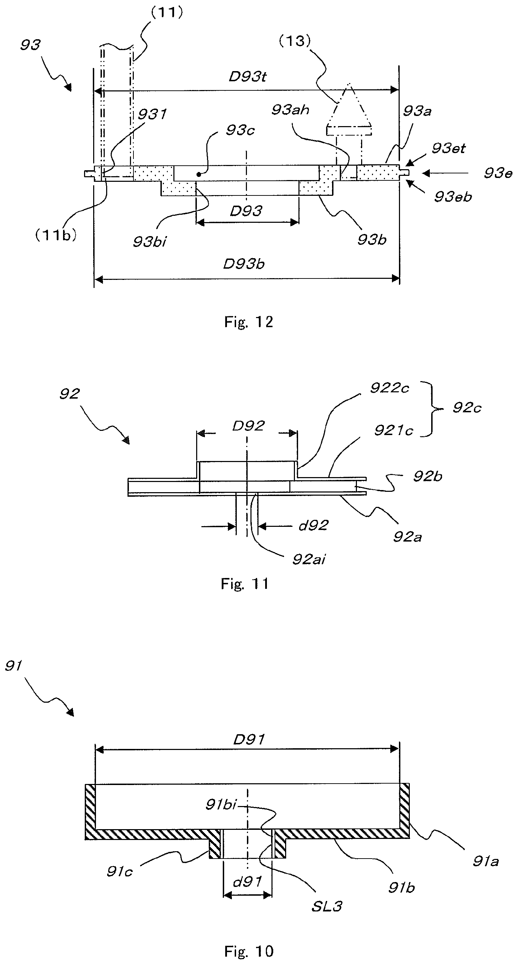

In Fig. 1, an upper end portion 11t of the foreign matter discharge pipe 11 is fitted in the perpendicular channel 48. A lower end portion 11b of the foreign matter discharge pipe 11 is connected to a foreign-matter discharge pump 9 (a fitting hole 931 of an upper lid member 93: see Fig. 12). As a result, the foreign-matter discharge pump 9 and the perpendicular channel 48 communicate with each other through the foreign matter discharge pipe 11.

As illustrated in Fig. 4, the dust-seal storing hole 42 is formed above the pump shaft hole 41.

The dust-seal storing hole 42 includes a large-diameter hole 42a and a small-diameter hole 42b, and the large-diameter hole 42a is opened in an upper end surface of the second housing 4, while a dust seal DS is accommodated in the small-diameter hole 42b.

A drop preventing plate 15 is mounted on the large-diameter hole 42a and prevents the dust seal DS from going out of the dust-seal storing hole 42.

In Fig. 4, a cyclone upper-end fitting hole 44a is formed below the cyclone upper chamber 44, and an upper end (cyclone inlet) 6ai of the cyclone 6 is connected to the cyclone upper-end fitting hole 44a.

In a canopy portion of the cyclone upper chamber 44, a discharge opening through hole 460 and a cyclone-discharge pipe mounting hole 462 are formed. Here, the operating fluid is discharged to the first pump 3 side through the discharge opening through hole 460. Moreover, an upper end portion 60b of a cyclone discharge pipe 60 is fitted in the cyclone discharge-pipe mounting hole 462.

Here, the cyclone discharge-pipe mounting hole 462 is arranged concentrically to the discharge opening through hole 460, and an inner diameter of the cyclone discharge-pipe mounting hole 462 is set substantially equal to an outer diameter of the upper end portion 60b of the cyclone discharge pipe 60. Moreover, an inner diameter dimension of the discharge opening through hole (cyclone exit) 460 is substantially equal to an inner diameter dimension of the cyclone discharge pipe 60.

As illustrated in Fig. 2, four pieces of the cyclone upper chambers 44 are formed in the first embodiment, and an inflow channel (so-called cyclone port) 49 extending in a curved state in a substantially tangent direction communicates with each of the cyclone upper chambers 44 outside in a radial direction of the chamber 44, and a planar shape of the inflow channel 49 and the chamber 44 is generally so-called "comma-shaped bead".

The inflow channel 49 has a shape extending in a curved manner in a substantially tangent direction outside in the radial direction of the chamber 44 so that a swirl flow can be easily generated when the operating fluid flows into the cyclone 6. A schematic section of the inflow channel 49 in Fig. 2 illustrates a section along a center axis of the inflow channel 49. As is obvious from the section, in order that the operating fluid can flows in easily, the farther away from the cyclone upper chamber 44 in the inflow channel 49 a region is, the shallower the region is formed.

Reference character 4m in Fig. 2 denotes a female screw hole screwed with a through bolt B2 for assembling four cyclones (see Fig. 1).

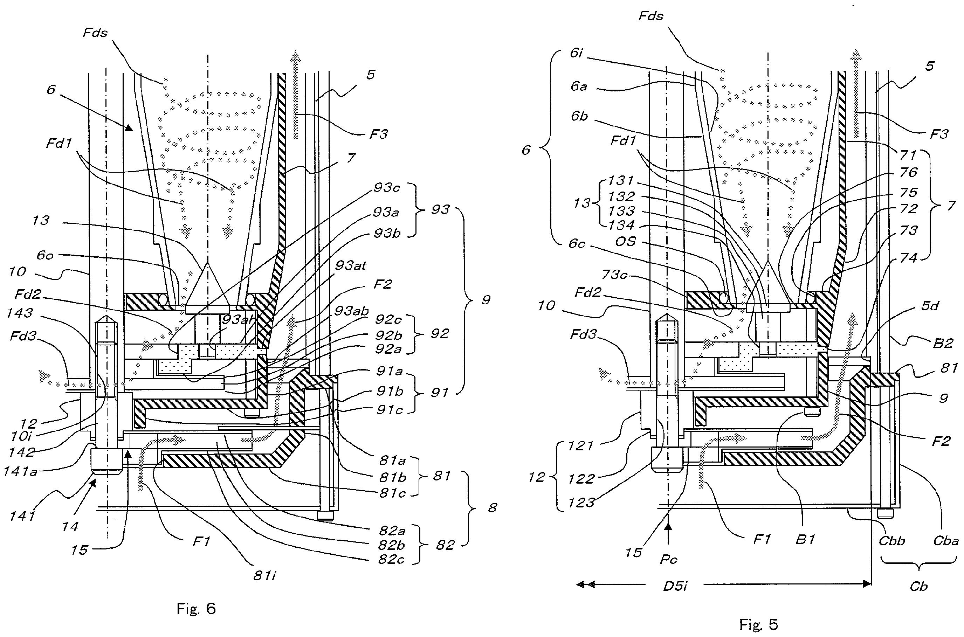

Subsequently, the cyclone 6 and the second pump 8 will be described by referring to Figs. 5 and 6.

Fig. 5 explains the cyclone 6, while Fig. 6 explains the second pump 8.

Here, Figs. 5 and 6 illustrate the same partial section, but since members (constitutions) to be explained by being referred to are different, positions of leader lines and reference numerals are different.

In Figs. 1 and 5, the cyclone 6 has a straight pipe portion 6a in an upper region and a taper portion 6b in a lower region. The cyclone 6 is provided in a region inside in the radial direction of the cylindrical guide member 7, and as illustrated in Fig. 2, four of them are arranged at positions point-symmetrical to the pump driving shaft 10.

Then, the cyclone 6 is mounted on the region between a cyclone upper-end fitting hole 44a (see Fig. 4) in the second housing 4 (see Fig. 1) and a cyclone lower-end fitting hole 75 (see Fig. 5) in the cylindrical guide member 7 (Fig. 5).

Reference character 6i in Fig. 5 denotes an inner peripheral surface of the cyclone 6. Foreign matter with a large specific gravity contained in the operating fluid falls down along this inner peripheral surface 6i while being turned by the swirl flow.

In Fig. 5, the cylindrical guide member 7 has an upper straight portion 71, a lower taper portion 72, a bottom portion 73, and a lower-end outer edge protruding portion 74. An outer peripheral surface of the lower taper portion 72 and an outer peripheral surface of the lower-end outer edge protruding portion 74 constitute a continuous taper surface.

A planar shape of the bottom portion 73 is not clearly illustrated but it is substantially circular, and a pump driving shaft insertion hole 73c is formed at the center thereof.

In the bottom portion 73, cyclone lower-end fitting holes 75 are formed at four positions point-symmetrical to the center point (center point of the pump driving shaft insertion hole 73c). The positions of the cyclone lower-end fitting holes 75 are projected positions of the cyclone upper-end fitting holes 44a (see Fig. 4) in the second housing 4.

In Fig. 5, below the cyclone lower-end fitting hole 75, a through hole 76 is formed in a region inside in the radial direction of the cyclone lower-end fitting hole 75. An inner diameter dimension of the through hole 76 is set equal to the inner diameter dimension of a lower end 6c of the cyclone 6.

The inner diameter dimension of the cyclone lower-end fitting hole 75 is larger than an outer diameter dimension of the lower end portion of the cyclone 6, and an O-ring or a seal material OS is interposed in an annular clearance between the cyclone lower-end fitting hole 75 and the outer peripheral surface of the lower end portion of the cyclone 6.

In the vicinity of the lower end 6c of the cyclone 6 inside in the radial direction of the cyclone 6, a throttle member (hereinafter referred to as a "conical member") 13 is arranged.

In Fig. 5, the conical member 13 has a conical head (cone-shaped head) 131, a disc portion 132, a column portion 133, and an embedded portion 134. A diameter of the disc portion 132 is equal to a lower end diameter of the conical head 131, and a diameter of a column 133 is smaller than a diameter of the disc portion 132. A diameter of the embedded portion 134 is set smaller than the diameter of the disc portion 132 and is equal to a through hole 93ah in the upper lid member 93 in the foreign-matter discharge pump 9 illustrated in Fig. 6. As illustrated in Figs. 5 and 6, the embedded portion 134 (Fig. 5) of the conical member 13 (Fig. 5) is fitted in the through hole 93ah (Fig. 6) formed in an upper surface 93a (Fig. 6) of the upper lid member 93 (Fig. 6) in the foreign-matter discharge pump 9.

As illustrated in Fig. 5, a boundary between the conical head 131 and the disc portion 132 is set so as to match the lower end 6c of the cyclone 6.

By providing the conical member 13 at the outlet 6o (see Fig. 6) of the lower end portion of the cyclone, an opening area of the outlet 6o of the lower end portion of the cyclone is reduced, and a flow velocity of the operating fluid at the outlet 6o is increased. In order to properly exert a solid-liquid separation performance of the cyclone 6, a cross-sectional area of the outlet 6o (see Fig. 6) of the lower end portion of the cyclone needs to be reduced and narrowed.

Here, depending on the taper of the taper portion 6b of the cyclone 6, for example, there can be a case in which said outlet 6o cannot be sufficiently narrowed unless a vertical dimension of the cyclone 6 is increased. However, the vertical dimension of the cyclone 6 should be made as small as possible.

In the illustrated first embodiment, by providing the conical member 13 at the outlet 6o (see Fig. 6) on the lower end portion of the cyclone, the cross-sectional area of the outlet 6o (see Fig. 6) on the lower portion of the cyclone can be sufficiently made small and narrowed without increasing the vertical dimension of the cyclone 6. As a result, the vertical dimension of the cyclone 6 can be made small without deteriorating the solid-liquid separation performance of the cyclone 6.

Subsequently, by referring to Figs. 6 to 13, the second pump 8 and the foreign-matter discharge pump 9 will be described.

In Fig. 6, the second pump 8 has casings 81 and 91. In this Specification, the casings 81 and 91 are collectively called "pump casing" in some cases.

Here, the casing 91 is shared by the second pump 8 and the foreign-matter discharge pump 9.

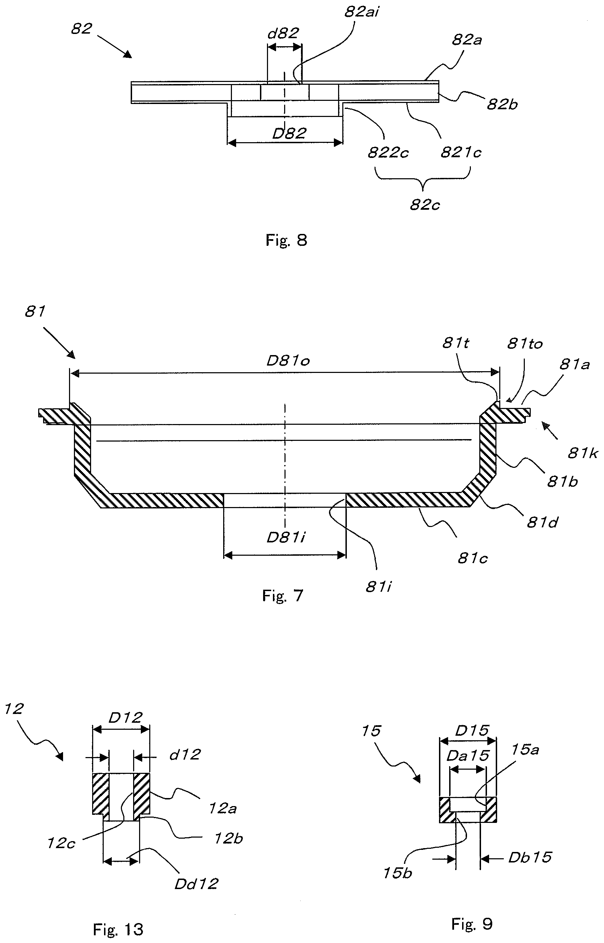

An entire shape of the casing 81 in the second pump 8 is illustrated in Fig. 7. In Fig. 7, the casing 81 has a flange portion 81a, a cylindrical portion 81b, and a bottom portion 81c.

The flange portion 81a protrudes outward in the radial direction on an upper end of the cylindrical portion 81b. A taper portion 81d is formed at a connection spot between the cylindrical portion 81b and the bottom portion 81c. The taper portion 81d is formed in order to reduce channel resistance of the operating fluid flowing through the casing 81. Here, an R (round portion) may be formed instead of the taper.

At a center in the radial direction of the bottom portion 81c, a through hole 81i with an inner diameter dimension indicated by reference character D81i is formed.

On an upper surface side of the flange porting 81a, an annular protruding portion 81t with a diameter of an outer periphery indicated by reference character D81o is formed. The outer peripheral diameter D81o of the annular protruding portion 81t is, as illustrated in Fig. 5, substantially equal to an inner diameter dimension D5i (Fig. 5) of a stepped portion 5d (Fig. 5) formed on an inner peripheral side of a lower end of the cylindrical casing 5, and an outer periphery 81 to of the annular protruding portion 81t is fitted in the inner diameter of the stepped portion 5d of the lower end of the cylindrical casing 5.

An impeller 82 in the second pump 8 has its entire shape illustrated in Fig. 8.

In Fig. 8, the impeller 82 has an upper disc member 82a, a plurality of blades 82b, and a lower disc member 82c.

The lower disc member 82c has a disc portion 821c and a cylindrical portion 822c integrally molded, and an outer diameter dimension of the cylindrical portion 822c is indicated by reference character D82.

A through hole 82ai is formed at a center of the upper disc member 82a, and an inner diameter dimension of the through hole 82ai is indicated by reference character d82.

An outer diameter dimension D82 of the cylindrical portion 822c is set smaller than a diameter D81i (see Fig. 7) of the through hole 81i formed in the bottom portion 81c of the casing 81. And the cylindrical portion 822c of the impeller 82 is inserted into the through hole 81i of the casing 81.

Fig. 9 illustrates a fixing member (second fixing member) 15 for fixing the impeller 82 to the pump driving shaft 10.

In Fig. 9, the second fixing member 15 has inner diameter holes 15a (large-diameter hole) and 15b (small-diameter hole) continuously formed, and a stepped through hole is formed by the holes 15a and 15b.

An outer diameter dimension Dd12 of a protruding portion 12b in a first fixing member 12 (see Fig. 13) is fitted with an inner diameter dimension Da15 of the large-diameter hole 15a. An inner diameter dimension Db15 of the small-diameter hole 15b is set slightly larger than a shaft portion 142 (see Fig. 6) of a pump impeller fixing bolt 14.

In Fig. 6, the foreign-matter discharge pump 9 includes the casing 91, an impeller 92, and the upper lid member 93. As described above, the casing 91 is shared by the foreign-matter discharge pump 9 and the second pump 8.

An entire shape of the casing 91 is illustrated in Fig. 10 and it has a cylindrical portion 91a, a bottom portion 91b, and a protruding cylinder portion 91c.

In Fig. 10, the protruding cylinder portion 91c is formed below at the center in the radial direction of the bottom portion 91b, and a sleeve SL3 for bearing is interposed in an inner peripheral surface 91bi of the protruding cylinder portion 91c.

An inner diameter dimension of the sleeve SL3 is indicated by reference character d91, and an inner diameter dimension of the cylindrical portion 91a is indicated by reference character D91. The inner diameter dimension d91 of the sleeve SL3 is slidably fitted with an outer diameter dimension D12 (see Fig. 13) of the fixing member 12.

Fig. 11 illustrates an entire shape of the impeller 92 of the foreign-matter discharge pump 9.

In Fig. 11, the impeller 92 has a lower disc member 92a, a plurality of blades 92b, and an upper disc member 92c. The upper disc member 92c has a disc portion 921c and a cylindrical portion 922c with an outer diameter dimension D92 integrally molded.

A through hole 92ai with an inner diameter dimension d92 is formed at the center in the radial direction of the lower disc member 92a.

The inner diameter dimension d92 of the through hole 92ai is set substantially equal to the outer diameter dimension Dd12 (see Fig. 13) of the protruding portion 12b of the first fixing member 12. The outer diameter dimension D92 of the cylindrical portion 922c is set slightly smaller than a central through hole 93bi of the upper lid member 93 illustrated in Fig. 12.

In Fig. 11, the cylindrical portion 922c of the impeller 92 is inserted into the central through hole 93bi (see Fig. 12) of the upper lid member 93 and the impeller 92 (cylindrical portion 922c) is rotatable in the through hole 93bi.

Fig. 12 illustrates an entire shape of the upper lid member 93 of the foreign-matter discharge pump 9.

In Fig. 12, the upper lid member 93 is generally constituted having a substantially disc shape and has an outer portion (hereinafter called "upper surface") 93a, a circular lower protruding portion 93b, and a central depressed portion 93c. An inner diameter dimension of the central depressed portion 93c is smaller than an outer diameter dimension of the lower protruding portion 93b.

The four through holes 93ah are formed at positions obtained by equally dividing the circumferential direction of the upper surface 93a. The fitting holes 931 are formed at four spots in the vicinity of an outer edge of the upper surface 93a, and the lower end 11b of the foreign matter discharge pipe 11 is fitted in the fitting hole 931.

Fig. 12 illustrates the through hole 93ah and the fitting hole 931 for convenience.

The through hole 93bi is formed at the center in the radial direction of the central depressed portion 93c, and an inner diameter dimension of the through hole 93bi is indicated by reference character D93.

In an outer edge portion 93e in the upper surface 93a of the upper lid member 93, a stepped notch 93et is formed over the entire region in the circumferential direction on the upper surface side, and a stepped notch 93eb is formed over the entire region in the circumferential direction on the lower surface side.

An outer diameter dimension D93t of a perpendicular surface in the stepped notch 93et on the upper surface side is set slightly smaller than an inner diameter dimension of the lower-end outer edge protruding portion 74 in the cylindrical guide member 7 illustrated in Fig. 5 and thus, in Figs. 5 and 6, the upper lid member 93 is fitted with the lower-end outer edge protruding portion 74 of the cylindrical guide member 7.

An outer diameter dimension D93b of the perpendicular surface in the stepped notch 93eb in Fig. 12 is set slightly smaller than the inner diameter dimension D91 (see Fig. 10) of the cylindrical portion 91a in the casing 91 and thus, in Figs. 5 and 6, the upper lid member 93 is fitted with an upper end of the cylindrical portion 91a in the casing 91.

In other words, the outer edge portion 93e (Fig. 12) of the upper lid member 93 is, as illustrated in Figs. 5 and 6, fitted with the lower-end outer edge protruding portion 74 in the cylindrical guide member 7 and the upper end of the cylindrical portion 91a in the casing 91.

Fig. 13 illustrates the fixing member (first fixing member) 12 for mounting the impeller 92 of the foreign-matter discharge pump 9 on a tip end of the pump driving shaft 10.

In Fig. 13, the fixing member 12 has a columnar shaft portion 12a having the outer diameter dimension D12 and a columnar small-diameter protruding portion 12b having the outer diameter dimension Dd12. Here, the outer diameter dimension Dd12 of the columnar small-diameter protruding portion 12b has a value smaller than that of the outer diameter dimension D12 of the columnar shaft portion 12a.

The cylindrical shaft portion 12a and the columnar small-diameter protruding portion 12b are concentric and has a through hole 12c having an inner diameter dimension d12 formed.

The outer diameter Dd12 of the columnar small-diameter protruding portion 12b is set slightly smaller than the inner diameter d82 (see Fig. 8) of the through hole 82ai of the upper disc member 82a in the impeller 82.

A procedure for fixing the impeller 82 of the second pump 8 and the impeller 92 of the foreign-matter discharge pump 9 on a tip end side of the pump driving shaft 10 will be described.

First, as illustrated in Fig. 6, as the fixing stud bolt (fixing bolt) 14 is arranged so that a bolt head 141 is located below, and a tip end (upper end in Fig. 6) of the fixing bolt 14 is inserted from the small-diameter hole 15b (Fig. 9) of the second fixing member 15. At that time, a surface (a surface on a lower side in Fig. 9) in which the small-diameter hole 15b of the fixing member 15 is opened is made to abut on a back surface side 141a of the bolt head 141.

Subsequently, in Fig. 6, in a state in which the cylindrical portion 822c (Fig. 8) in the impeller 82 of the second pump 8 is on a lower side, the bolt 14 is inserted from the through hole 82ai.

At that time, arrangement is made such that a region inside in the radial direction on the back surface (lower side surface in Fig. 8: surface on the blade 82b side) of the disc member 82a of the impeller 82 abut on an end surface on a side where the large-diameter hole 15a in the second fixing member 15 is opened.

After the impeller 82 of the second pump 8 has been inserted into the bolt 14, in Fig. 6, it is inserted into the bolt 14 from the small-diameter protruding portion 12b side of the first fixing member 12 (see Fig. 13).

When the first fixing member 12 is inserted into the bolt 14, the small-diameter protruding portion 12b of the first fixing member 12 is fitted in the through hole 82ai (see Fig. 8) of the upper disc member 82a in the impeller 82 of the second pump 8 and also fitted in the large-diameter hole 15a (see Fig. 9) of the second fixing member 15.

After the first fixing member 12 is inserted into the bolt 14, the casing 91 of the foreign-matter discharge pump 9 is inserted into the bolt 14 from the protruding cylinder portion 91c side. At that time, insertion is made into the bolt 14 so that the casing 91 is pressed down until the upper end of the shaft portion 12a (see fig. 13) of the first fixing member 12 protrudes above the bottom portion 91b in the casing 91 as illustrated in Fig. 6.

In a state in which the casing 91 is inserted into the bolt 14, the impeller 92 of the foreign-matter discharge pump 9 is inserted into the a bolt 14 from the through hole 92ai (see Fig. 11) of the lower disc member 92a. When the impeller 92 is inserted into the bolt 14, as illustrated in Fig. 6, the lower surface of the lower disc member 92a (see Fig. 11) is made to abut on the upper end of the first fixing member 12.
when the second fixing member 15, the impeller 82 of the second pump 8, the first fixing member 12, the casing 91 of foreign-matter discharge pump 9, and the impeller 92 of the foreign-matter discharge pump 9 are inserted into the fixing bolt 14 in this order, as illustrated in Fig. 6, a male screw 143 of the bolt 14 is screwed with the female screw 10i formed on the tip end of the pump driving shaft 10 and tightened by a predetermined tool.

As a result, the impeller 82 of the second pump 8 and the impeller 92 of the foreign-matter discharge pump 9 are fixed to the tip end of the pump driving shaft 10.

As illustrated in Figs. 1 and 5, the lowermost part of the pump device 100 is covered by the cover member Cb.

The cover member Cb prevents relatively large foreign matter from being suctioned into the pump device 100 by covering the suction side of the second pump 8.

In Fig. 5, the cover member Cb has a cylindrical portion Cba and a bottom portion Cbb. The cover member Cb is constituted by punching metal in which a large number of round holes are opened, for example, over a region in the middle in the perpendicular direction from the bottom portion Cbb to the cylindrical portion Cba. Though not shown, the whole region of the cover member Cb is soaked in the operating fluid.

Though not clearly shown, in the vicinity of the outer edge in the bottom portion Cbb, a bolt insertion hole for the mounting bolt B2 is formed for mounting the cover member Cb on the second housing 4 (see Fig. 1).

Moreover, a bolt insertion hole for a mounting bolt B2 is formed in the casing 81, too (not shown in Fig. 7).

In Figs. 1 and 5, the mounting bolt B2 penetrates the bolt insertion hole formed in the cover member Cb and the pump casing 81, and the male screw at the tip end of the bolt B2 is screwed with the female screw 4m (see Fig. 2) formed on a lower end surface of the second housing 4.

Since a back surface of the bolt head of the mounting bolt B2 abuts on the vicinity of the outer edge of the bottom portion Cbb of the cover member Cb, an axial force of the mounting bolt B2 is transmitted to the cover member Cb.

In Fig. 5, a bolt B1 is a bolt for mounting the casing 91 on the second housing 4 side.

In Fig. 6, insertion holes through which the bolt B1 is inserted are formed at four spots in the vicinity of the outer edge portion in the radial direction of the bottom portion 91b in the casing 91 of the foreign-matter discharge pump 9 (not shown).

In Figs. 5 and 6, an insertion hole (not shown) of the bolt B1 is formed in each of the upper lid member 93 (Fi. 6) in the foreign-matter discharge pump 9 and the bottom portion 73 (Fig. 5) in the cylindrical guide member 7.

The mounting bolt B1 penetrates the bolt insertion hole formed in the casing 91, the upper lid member 93, and the cylindrical guide member 7. In Fig. 1, the male screw (not shown) at the tip end of the bolt B1 is screwed with a female screw 4p (see Fig. 2) formed on the lower end surface of the second housing 4.

As illustrated in Fig. 6, since the back surface of the head of the mounting bolt B1 abuts on the vicinity of the outer edge portion in the radial direction of the bottom portion 91b in the casing 91, the axial force of the mounting bolt B1 is transmitted to the casing 91.

Subsequently, by referring to Figs. 1 and 4 to 6, a flow of the operating fluid will be described. In more detail, a process in which foreign matter is separated from the operating fluid containing the foreign matter, and each of the purified operating fluid and the fluid containing the foreign matter is discharged from the discharge openings 26 and 46o will be described.

In order to prevent complication of the illustration, F6 to F10 in the flow of the operating fluid are omitted in Fig. 1.

The pump device 100 in the first embodiment is installed above a lid body of a tank, not shown, storing the operating fluid, for example. That is, the flange 43 of the first housing in the pump device 100 is placed on the lid of the tank, not shown, and fixed by a fixing bolt, not shown.

The cover member Cb on the lower end of the pump device 100 is soaked in the operating fluid in the tank, not shown.

In Fig. 1, by bringing an operation switch, not shown, in the pump device 100 to an "ON" state, the electric motor 1 starts rotation. With the rotation of the electric motor 1, the pump driving shaft 10 rotates, and the impeller 82 of the second pump 8 mounted on the tip end side of the pump driving shaft 10 rotates. Moreover, the impeller 92 of the foreign-matter discharge pump 9 directly fixed to the tip end of the pump driving shaft 10 also rotates.

In Figs. 5 and 6, the operating fluid in the tank, not shown, is pumped up by the impeller 82 of the second pump 8 (flow of an arrow F1 in Figs. 5 and 6), flows through an annular gap between the casing 81 of the second pump 8 and the casing 91 of the foreign-matter discharge pump 9 (flow of an arrow F2) and flows into the cyclone upper chamber 44 in Fig. 4 (flow of an arrow F3 in Fig. 4).

Though not shown, inside in the radial direction of the cylindrical casing 5 and outside in the radial direction of the cylindrical guide member 7, a spiral guide member can be provided so as to increase a swirl component of the swirl flow indicated in the arrow F3.

In Fig. 4, in the operating fluid flowing into the cyclone 6 via the cyclone inlet 6ai from the cyclone upper chamber 44, a clean operating fluid not containing foreign matter with a large specific gravity such as chips and the like is indicated by arrows F4 and F5. The clean operating fluid is suctioned to the first pump 3 side (above) from a lower end portion 60a of the cyclone discharge pipe 60 and rises through the cyclone discharge pipe 60. Then, it flows into the hollow portion 30i of the suction-side connecting member 30 and flows into the first pump 3 (flow of an arrow F6).

The operating fluid flowed into the hollow portion 30i of the suction-side connecting member 30 is added with head by a centrifugal force of the impeller 31b of the first pump unit 31 and has its flow velocity increased (arrow F7) and is discharged outward in the radial directions of the impeller 31b.

The operating fluid discharged outward in the radial direction of the impeller 31b is turned back by an inner wall surface of the pump housing 31a (arrow F8) and flows into the subsequent stage of the pump unit 32.

Subsequently, the pressure is raised in the pump units 32 to 35 in each stage (arrow F8 and arrow F9), flows from the pump outlet 3o through the channel 24 and the discharge opening 26 of the first housing 2 (F10) and is sent to a machine tool, not shown, for example, through a connector and a pipeline, not shown.

In the operating fluid flowed into the cyclone 6, foreign matter with a large specific gravity is pressed onto the cyclone inner peripheral surface 6i side by the centrifugal force by the swirl flow F4 and falls down along the cyclone inner peripheral surface 6i (flow of an arrow Fd1).

As illustrated in Figs. 5 and 6, the operating fluid containing the foreign matter having fallen down on the inner peripheral surface 6i is narrowed by the cone member 13 which is a throttle member at the cyclone outlet 6o, has the flow velocity increased, and flows into the impeller 92 of the foreign-matter discharge pump (arrow Fd2). Then, as illustrated in Figs. 1, 5, and 6, the fluid containing the foreign matter has the head added by the rotation of the impeller 92 and has the velocity increased and is discharged from the impeller 92 (arrow Fd3).

As illustrated in Fig. 1, the operating fluid (arrow Fd3: operating fluid containing foreign matter) discharged from the impeller 92 flows through the foreign matter discharge pipe 11 (arrow Fd4) via the channel 46 (arrow Fd5) and is discharged from the discharge opening 46o (Fd6).

Then, via a pipeline, not shown, it is sent to a foreign-matter processing facility, not shown. For this foreign-matter processing facility, a facility according to a known art can be applied, and there is no particular limiting condition.

As illustrated in Fig. 1, a return channel Ld is formed from the first housing 2 through the second housing 4.

The return channel Ld functions as a drain channel of the operating fluid leaking to above the mechanical seal MS and extends from a bottom portion corner part (corner) in the cylindrical hollow portion 21 of the first housing 2 via the radial outer edge portion of the housing lower end surface 2e to the vicinity of the radial outer edge of the housing of the first pump 3 in the perpendicular direction and communicates with an opening Lde in the vicinity of the radial outer edge in the lower end surface of the second housing 4.

In the pump device 100 in the first embodiment, leakage of the operating fluid to a region above the mechanical seal MS is suppressed. Even if the operating fluid leaks to the region above the mechanical seal MS, the leaked operating fluid is returned to the opening Lde through the return channel Ld.

A position of the opening Lde is provided at the position inside in the radial direction with respect to the bolt hole 40h for mounting formed in the mounting flange 43.

As described above, the pump device 100 is installed above the tank, not shown, for storing the operating fluid, and a through hole, for example is formed in the lid of the tank, not shown, and on the through hole, not shown, the stepped portion inside in the radial direction of the mounting flange 43 is mounted by spigot-joint. The stepped portion inside in the radial direction of the mounting flange 43 is indicated by reference character Tm (Fig. 4), and an outer diameter dimension of the stepped portion Tm is equal to an inner diameter of the through hole in the lid of the tank, not shown.

In Fig. 1, the leaked operating fluid is returned into the storing tank, not shown, through the return channel Ld, the opening Lde, and the through hole.

According to the pump device 100 in the first embodiment described above by referring to Figs. 1 to 13, since the first pump 3 is constituted by the centrifugal pump having the impeller, a large flow rate (a flow rate of 150 liters/minute or more, for example) can be also handled. Thus, a larger flow rate of coolant processing of the machine tool can be handled.

Here, since the centrifugal pump having the impeller has a poor self-suctioning performance, if the first pump 3 is provided above the operating fluid storing portion (the coolant tank, for example), suctioning of the operating fluid in the storing portion is difficult. However, the pump device 100 of the first embodiment has the second pump 8, and the operating fluid in the storing portion can be pushed into the suction opening 30i side Of the first pump 3 by the second pump 8, and thus, necessary processing can be performed by the first pump 3 (the non positive displacement pump) with the poor self-suctioning performance.

Moreover, according to the pump device 100, foreign matter such as chips and the like can be separated from the operating fluid by the cyclone 6.

In the pump device 100 of the first embodiment, since the first pump 3 is constituted by the centrifugal pump having the impeller, there is no need to provide a relief valve at the first pump outlet 30i.

In a case in which the first pump is constituted by a displacement pump, if a flow of the operating fluid stops on the downstream side of the outlet of the displacement pump, an operating fluid pressure in the vicinity of the outlet becomes excessive, and there is a possibility that the displacement pump is broken. Thus, if the displacement pump is to be used, the relief valve and an operating fluid relief channel are indispensable.

On the other hand, in the pump device 100 of the first embodiment, since the first pump 3 is a centrifugal pump 3 having an impeller, even if the flow of the operating fluid is clogged (stops) on the downstream side of the pump outlet 3o (not shown), the impeller of the first pump 3 merely idles and the operating fluid pressure in the vicinity of the outlet 3o does not become excessive. Therefore, in the pump device 100 of the first embodiment, there is no need to form the relief valve and the operating fluid relief channel in the vicinity of the outlet 3o, and a manufacturing cost can be saved for the relief valve and the operating fluid relief channel, and maintenance of the relief valve and the operating fluid relief channel is no longer necessary.

In the prior-art technology, if two stages of cyclones (primary cyclone and secondary cyclone) are provided in the structure, a case in which the flow rate of the operating fluid becomes large, the operating fluid cannot be sufficiently separated to solid-liquid separation by the two stages of the cyclones.

On the other hand, according to the pump device 100 of the first embodiment, since only one stage of the cyclone 6 is provided, even if the flow rate of the operating fluid becomes large, the operating fluid can be separated to sufficient solid-liquid separation. However, it is not impossible to provide plural stages of the cyclones 6.

Moreover, according to the illustrated first embodiment, the foreign matter discharge pipe 11 communicating with the discharge opening 46o from the outlet (lower end portion) 6o of the cyclone 6 is provided. Thus, the operating fluid containing the foreign matter discharged from the cyclone outlet 6o is discharged to the discharge opening 46o above the operating fluid storing portion (the coolant tank, not shown, for example) through the foreign matter discharge pipe 11.

By arranging the pipeline communicating with a foreign-matter processing facility (a filter or the like, for example, not shown) from said discharge opening 46o above the operating fluid storing portion (not shown), the operating fluid containing the foreign matter can be easily supplied to the foreign-matter processing facility.

In other words, in the prior art not having the foreign matter discharge pipe 11, the operating fluid containing the foreign matter has been also discharged to the operating fluid storing portion and thus, in order to supply the operating fluid containing the foreign matter to the foreign-matter processing facility, a mechanism or a pipeline for sending the foreign matter to the foreign-matter processing facility should be separately provided in the operating fluid storing portion. In the pump device 100 of the first embodiment, there is no need to provide a mechanism or a pipeline for sending the foreign matter to the foreign-matter processing facility in the operating fluid storing portion separately, and a manufacturing cost can be reduced for that portion.

In the illustrated first embodiment, the operating fluid suctioned by the second pump 8 and discharged outward in the radial direction flows into the cyclone 6 while forming a swirl flow flowing in the circumferential direction and rising in the cylindrical casing 5. Here, resistance is generated in the swirl flow in the swirling direction by the cyclone 6 and other members in the pump device 100, and there is a possibility that a favorable swirl flow is not generated and the operating fluid cannot flow into the cyclone 6.

On the other hand, in the pump device 100 according to the first embodiment, in a region above the second pump 8 and outside in the radial direction in the second pump 8, the cylindrical guide member 7 extending in the direction of the rotating shaft 10 of the first pump 3 and the second pump 8 is provided. Thus, there is no projection or the like outside in the radial direction of the cylindrical guide member 7, and the operating fluid is guided by the cylindrical guide member 7 and flows smoothly in the circumferential direction along the guide member 7, and a favorable swirl flow is formed. The operating fluid suctioned by the second pump 8 rises efficiently in the pump device 100 and can flow into the cyclone 6.

In the pump device 100 in the first embodiment, the inlet 6ai of the cyclone 6 communicates with the inflow passage 49 extending in the circumferential direction, and the inflow passage 49 is opened to the swirl flow along the cylindrical guide member 7.

Thus, the operating fluid suctioned by the second pump 8 can easily enter the cyclone 6, and the foreign matter contained in the operating fluid is efficiently separated from the operating fluid by a centrifugal separation action in the cyclone 6.

Moreover, in the pump device 100 of the first embodiment, the throttle member (conical member) 13 is provided on the lower end portion of the cyclone 6, and a cross-sectional area of the outlet 6o of the cyclone lower end portion can be made smaller (narrowed) by the throttle member 13.

Since the cross-sectional area of the outlet 6o of the cyclone lower end portion is narrowed (made smaller) by the throttle member 13, a flow rate of the operating fluid in the outlet 6o can be adjusted. As a result, the flow rate of the operating fluid can be adjusted even if the length of the cyclone 6 in the axial direction is reduced.

That is, according to the pump device 100 of the first embodiment, the entire pump device can be made compact by making the dimension of a region below the first pump 3 smaller without increasing a dimension of the pump rotating shaft direction (vertical direction) of the cyclone 6.

Subsequently, a second embodiment of the present invention will be described by referring to Fig. 14.

In the first embodiment, four cyclones are provided as illustrated in Fig. 2, but three cyclones are provided in the second embodiment in Fig. 3.

Fig. 14 is a view of a second housing 4A in the second embodiment when seen from below the housing 4A.

In Fig. 14, cyclone upper chambers 44A are formed at three positions point-symmetrical to a housing center Pc, and outside in the radial direction of each of the three cyclone upper chambers 44A, an inflow channel (cyclone port) 49A extending substantially in the tangent direction outside in the radial direction and connecting toward the cyclone upper chambers 44A is formed. The cyclone upper chamber 44A and the cyclone port 49A generally have a planar shape of "comma-shaped bead". The shape of the inflow channel 49A is similar to that of the inflow channel 49 (see Fig. 2) in the first embodiment.

Reference character 4Am in Fig. 14 denotes a female screw hole, and the female screw hole is screwed with a male screw of three through bolts for assembling the cyclone, not shown.

Reference character 44Ao denotes an outlet of the cyclone.

The other constitutions, operations and effects in the second embodiment are similar to those in the first embodiment in Figs. 1 to 13.

It should be noted that the illustrated embodiments are only illustrations and are not description for the purpose of limiting the scope of the present invention which is defined by the appended claims. For example, in the illustrated embodiments, four (see Fig. 2) or three (see Fig. 14) pieces of the cyclones are provided, but five or more cyclones can be provided and only one cyclone may be provided.

Furthermore, in the illustrated embodiments, the case in which the coolant (cooling oil) is pumped up is described, but the present invention can be also applied to the other applications.

In addition to the above, the foreign matter discharge pump 9 can be also omitted from the illustrated embodiments.

### [Reference Signs List]

- 1: electric motor
- 2: first housing
- 3: first pump
- 4: second housing
- 5: cylindrical casing
- 6: cyclone
- 7: cylindrical guide member
- 8: second pump
- 9: foreign matter discharge pump
- 10: pump driving shaft
- 11: foreign matter discharge pipe

## Claims

1. A pump device, comprising:
an operating fluid storing portion;
a first pump (3) ;
a second pump (8) having a rotating shaft coaxial with a rotating shaft (10) of the first pump (3) and being provided below a suction opening (30i) of the first pump, the second pump being arranged to pump up (F1) operating fluid from the operating fluid storing portion;
at least one cyclone separator (6) provided in a region above the second pump (8) and below the suction opening (30i) of the first pump (3), for receiving (F3) operating fluid pumped up by the second pump and having a function of separating the operating fluid into a clean operating fluid not containing foreign matter (F4, F5) and an operating fluid containing the foreign matter (Fd1), the cyclone separator being arranged to supply (F6) the clean operating fluid to the first pump (3), and having a cyclone separator outlet (6o) for the operating fluid containing the foreign matter (Fd2); and
a discharge opening (46o) for the operating fluid containing the foreign matter separated by the cyclone separator (6);
**characterised in that**:
the first pump (3) is a non-positive displacement pump and is provided above the operating fluid storing portion;
the discharge opening (46o) is provided above the operating fluid storing portion; and
a discharge pipe (11) is provided which communicates with said discharge opening (46o) from a level of the cyclone separator outlet (6o), wherein in use the operating fluid containing the foreign matter flows (Fd4) through the discharge pipe (11) and is discharged (Fd6) from the discharge opening (46o).

2. The pump device according to claim 1, wherein
a guide member (7) extending in a direction of the rotating shafts (10) of the first pump (3) and the second pump (8) is provided in a region above and outside in a radial direction of an impeller (82) of the second pump (8).

3. The pump device according to claim 2, wherein
a cyclone separator inlet (6ai) communicates with an inflow passage (49) extending in a circumferential direction, and said inflow passage (49) is opened to a swirl flow along said guide member (7).

4. The pump device according to any one of claims 1 to 3, wherein

## Patentansprüche

1. Pumpvorrichtung, umfassend:
einen Abschnitt zum Speichern von Betriebsflüssigkeit;
eine erste Pumpe (3);
eine zweite Pumpe (8), die eine drehenden Welle aufweist, die mit einer drehenden Welle (10) der ersten Pumpe (3) koaxial und unter einer Ansaugöffnung (30i) der ersten Pumpe vorgesehen ist, wobei die zweite Pumpe angeordnet ist, um Betriebsflüssigkeit von dem Abschnitt zum Speichern der Betriebsflüssigkeit heraufzupumpen (F1);
mindestens einen Zyklonabscheider (6), der in einem Bereich über der zweiten Pumpe (8) und unter der Ansaugöffnung (30i) der ersten Pumpe (3) vorgesehen ist, um Betriebsflüssigkeit aufzunehmen (F3), die von der zweiten Pumpe nach oben gepumpt wurde, und der eine Funktion zum Trennen der Betriebsflüssigkeit in eine saubere Betriebsflüssigkeit, die keine Fremdstoffe enthält (F4, F5), und eine Betriebsflüssigkeit, die die Fremdstoffe enthält (Fd1), aufweist, wobei der Zyklonabscheider angeordnet ist, um der ersten Pumpe (3) die saubere Betriebsflüssigkeit zuzuführen (F6), und einen Zyklonabscheiderauslass (6o) für die Betriebsflüssigkeit, die die Fremdstoffe enthält (Fd2), aufweist; und
eine Ablassöffnung (46o) für die durch den Zyklonabscheider (6) abgetrennte Betriebsflüssigkeit, die die Fremdstoffe enthält;
**dadurch gekennzeichnet, dass**:
die erste Pumpe (3) keine Verdrängerpumpe ist und über dem Abschnitt zum Speichern der Betriebsflüssigkeit vorgesehen ist;
die Ablassöffnung (46o) über dem Abschnitt zum Speichern der Betriebsflüssigkeit vorgesehen ist; und
eine Ablassleitung (11) vorgesehen ist, die mit der Ablassöffnung (46o) von einer Ebene des Zyklonabscheiderausgangs (6o) kommuniziert, wobei in der Anwendung die Betriebsflüssigkeit, die die Fremdstoffe enthält, durch die Ablassleitung (11) fließt (Fd4) und aus der Ablassöffnung (46o) abgelassen (Fd6) wird.

2. Pumpvorrichtung nach Anspruch 1, wobei
ein Führungselement (7), das sich in eine Richtung der drehenden Wellen (10) der ersten Pumpe (3) und der zweiten Pumpe (8) erstreckt, in einem Bereich über und außerhalb in einer radialen Richtung eines Flügelrads (82) der zweiten Pumpe (8) vorgesehen ist.

3. Pumpvorrichtung nach Anspruch 2, wobei
ein Zyklonabscheidereinlass (6ai) mit einem Einströmungskanal (49) kommuniziert, der sich in einer umlaufenden Richtung erstreckt, und wobei der Einströmungskanal (49) zu einer Drallströmung entlang des Führungselements (7) geöffnet ist.

4. Pumpenvorrichtung nach einem der Ansprüche 1 bis 3, wobei
ein Drosselelement (13) an einem unteren Endabschnitt des Zyklonabscheiders (6) vorgesehen ist.

## Revendications

1. Dispositif de pompage, comprenant :
une portion de stockage de fluide fonctionnel ;
une première pompe (3) ;
une seconde pompe (8) ayant un arbre de rotation coaxial avec un arbre de rotation (10) de la première pompe (3) et étant disposé au-dessous d'une ouverture d'aspiration (30i) de la première pompe, la seconde pompe étant agencée pour pomper (F1) du fluide fonctionnel depuis la portion de stockage de fluide fonctionnel ;
au moins un séparateur cyclonique (6) prévu dans une région au-dessus de la seconde pompe (8) et au-dessous de l'ouverture d'aspiration (30i) de la première pompe (3), pour recevoir (F3) du fluide fonctionnel pompé par la seconde pompe et ayant une fonction de séparation du fluide fonctionnel en un fluide fonctionnel propre ne contenant pas de matière étrangère (F4, F5) et en un fluide fonctionnel contenant de la matière étrangère (Fd1), le séparateur cyclonique étant agencé pour fournir (F6) le fluide fonctionnel propre à la première pompe (3) et ayant une sortie de séparateur cyclonique (6o) pour le fluide fonctionnel contenant la matière étrangère (Fd2) ; et
une ouverture de décharge (46o) pour le fluide fonctionnel contenant la matière étrangère séparée par le séparateur cyclonique (6) ;
**caractérisé en ce que** :
la première pompe (3) est une pompe à déplacement non positif et est prévue au-dessus de la portion de stockage de fluide fonctionnel ;
l'ouverture de décharge (46o) est prévue au-dessus de la portion de stockage de fluide fonctionnel ; et
un tuyau de décharge (11) est prévu qui communique avec ladite ouverture de décharge (46o) à partir d'un niveau de la sortie de séparateur cyclonique (6o), dans lequel en fonctionnement, le fluide fonctionnel contenant la matière étrangère s'écoule (Fd4) à travers le tuyau de décharge (11) et est déchargé (Fd6) à partir de l'ouverture de décharge (46o).

2. Dispositif de pompage selon la revendication 1, dans lequel
un élément de guidage (7) s'étendant dans une direction des arbres de rotation (10) de la première pompe (3) et de la seconde pompe (8) est prévu dans une région au-dessus et à l'extérieur dans une direction radiale d'une roue à aubes (82) de la seconde pompe (8).

3. Dispositif de pompage selon la revendication 2, dans lequel
une admission de séparateur cyclonique (6ai) communique avec un passage d'afflux (49) s'étendant dans une direction circonférentielle, et ledit passage d'afflux (49) est ouvert à un flux de remous le long dudit élément de guidage (7).

4. Dispositif de pompage selon l'une quelconque des revendications 1 à 3, dans lequel
un élément formant étrangleur (13) est prévu sur une portion d'extrémité inférieure du séparateur cyclonique (6).
